Europäisches Patentamt

European Patent Office

Office européen des brevets

(11) Veröffentlichungsnummer: **0 361 095**
**A1**

(19)

(12) **EUROPÄISCHE PATENTANMELDUNG**

(21) Anmeldenummer: 89115762.0

(51) Int. Cl.5 **C08J 9/12 , //C08L25/04**

(22) Anmeldetag: 26.08.89

(30) Priorität: 01.09.88 DE 3829633

(43) Veröffentlichungstag der Anmeldung:
**04.04.90 Patentblatt 90/14**

(84) Benannte Vertragsstaaten:
**BE DE FR GB IT NL SE**

(71) Anmelder: **BASF Aktiengesellschaft**
**Carl-Bosch-Strasse 38**
**D-6700 Ludwigshafen(DE)**

(72) Erfinder: **Alicke, Gerhard**
**Brunnerstrasse 11**
**D-6520 Worms 1(DE)**
Erfinder: **Weber, Reinhold**
**An der Steinernen Bruecke 11**
**D-6704 Mutterstadt(DE)**
Erfinder: **Weilbacher, Manfred, Dr.**
**Taunusstrasse 27**
**D-6710 Frankenthal(DE)**

(54) **Verfahren zur Herstellung von Schaumstoffplatten mit hoher Druckfestigkeit und hohem Wärmedämmvermögen.**

(57) Schaumstoffplatten mit hoher Druckfestigkeit mit hohem Wärmedämmvermögen werden erhalten durch Extrusion eines Gemisches aus einem Styrolpolymerisat und 8 bis 16 Gew-% eines Treibmittelgemisches, enthaltend 75 bis 90 Gew-% 1,1-Difluor-1-chlorethan und/oder 1,1,1-Trifluor-2,2-dichlorethan, 10 bis 25 Gew-% Ethylchlorid und/oder gesättigte $C_3$- bis $C_5$-Kohlenwasserstoffe sowie gegebenenfalls bis zu 15 Gew-% Kohlendioxid.

EP 0 361 095 A1

## Verfahren zur Herstellung von Schaumstoffplatten mit hoher Druckfestigkeit und hohem Wärmedämmvermögen

Gegenstand der Erfindung ist ein Verfahren zur Herstellung von Schaumstoffplatten mit hoher Druckfestigkeit und hohem Wärmedämmvermögen durch Extrusion eines Gemisches aus einem Styrolpolymerisat, einem Treibmittel und gegebenenfalls üblichen Zusatzstoffen.

Für die Herstellung von Schaumstoffen auf Basis von Styrolpolymerisaten ist eine Vielzahl von Treibmitteln vorgeschlagen worden. Bevorzugt wird Methylchlorid verwendet. Wegen seiner Toxidität sind jedoch extreme Vorsichtsmaßnahmen sowohl bei der Herstellung als auch bei Nachlagerung des Schaumstoffs erforderlich. Der Schaumstoff zeigt zudem bei erhöhten Temperaturen ein beträchtliches Schwindungsverhalten. Bei Verwendung von Chlorfluorkohlenwasserstoffen, wie Dichlordifluormethan, als Treibmittel erhält man Schaumstoffe, die sich bei erhöhten Temperaturen ausdehnen. Gemische aus etwa gleichen Teilen Methylchlorid und Dichlordifluormethan führen zwar zu dimensionsstabilen Schaumstoffen, wegen der Toxidität des Methylchlorids verbietet sich jedoch ihr Einsatz. Ersetzt man Methylchlorid durch das wesentlich weniger toxische Ethylchlorid, so entsteht ein relativ weicher Schaum, der eine ungenügende Druckfestigkeit aufweist. Auch Kohlendioxid ist bereits als Treibmittel empfohlen worden. Sein Einsatz führt jedoch zu offenzelligen Schaumstoffen, die ein hohes Wasseraufnahmevermögen besitzen.

Die Aufgabe der Erfindung besteht darin, ein Verfahren zur Herstellung von Schaumstoffen aus Styrolpolymerisaten aufzuzeigen, bei dem keine toxischen Treibmittel verwendet werden und das zu Schaumstoffen mit geschlossenen Zellen führt, die nur ein geringes Wasseraufnahmevermögen besitzen, die dimensionsstabil sind und eine hohe Druckfestigkeit und Wärmeformbeständigkeit aufweisen. weiterhin ist es Aufgabe der Erfindung, die Verwendung von Dichlordifluormethan zu vermeiden, da dieser Stoff angeblich in der Atmosphäre die Wirksamkeit der Ozonschicht als Solarschirm vermindert.

Die Aufgabe der Erfindung wird gelöst durch die Verwendung eines Treibmittelgemisches enthaltend 75 bis 90 Gew-% 1,1-Difluor-1-chlorethan und/oder 1,1,1-Trifluor-2,2-dichlorethan, 10 bis 25 Gew-% Ethylchlorid und/oder gesättigte $C_3$-bis $C_5$-Kohlenwasserstoffe wie Propan, n-Butan, i-Butan, n-Pentan und/oder i-Pentan und gegebenenfalls bis zu 15 Gew-% Kohlendioxid.

Gegenstand der Erfindung ist somit ein Verfahren zur Herstellung von Schaumstoffplatten mit hoher Druckfestigkeit und hohem Wärmedämmvermögen durch Extrusion eines Gemisches aus einem Styrolpolymerisat, 8 bis 16 Gew.-%, bezogen auf das Styrolpolymerisat, eines Treibmittels sowie gegebenenfalls üblichen Zusatzstoffen, dadurch gekennzeichnet, daß man als Treibmittel ein Gemisch verwendet, welches

a) 75 bis 90 Gew.-% 1,1-Difluor-1-chlorethan und/oder 1,1,1-Trifluor-2,2-dichlorethan

b) 10 bis 25 Gew.-% Ethylchlorid und/oder gesättigte $C_3$- bis $C_5$-Kohlenwasserstoffe und

c) 0 bis 15 Gew.-% Kohlendioxid enthält.

Aus der GB-A 1537421 ist bereits ein Verfahren zur Herstellung von Polystyrolschaumstoffplatten bekannt, bei dem als Treibmittel ein Gemisch aus 50 Gew-% 1,1-Difluor-1-chlorethan und 50 Gew-% Ethylchlorid, verwendet wird. Der erhaltene Schaumstoff ist relativ weich und weist eine ungenügende Druckfestigkeit auf.

Styrolpolymerisate im Sinne dieser Erfindung sind Polystyrol und Mischpolymerisaten des Styrols, die mindestens 50 Gew-% Styrol einpolymerisiert enthalten. Als Comonomere kommen z.B. in Betracht α-Methylstyrol, kernhalogenierte Styrole, kernalkylierte Styrole, Acrylnitril, Ester der (Meth)-acrylsäure von Alkoholen mit 1 bis 8 C-Atomen, N-Vinylverbindungen, wie Vinylcarbazol, Maleinsäureanhydrid oder auch geringe Mengen an Verbindungen, die zwei polymerisierbare Doppelbindungen enthalten, wie Butadien, Divinylbenzol oder Butandioldiacrylat.

Das Treibmittel wird in einer Menge von 8 bis 16 Gew-%, vorzugsweise 10 bis 14 Gew-%, bezogen auf das Styrolpolymerisat, verwendet. Es enthält 75 bis 90 Gew-%, vorzugsweise 80 bis 90 Gew-% 1,1-Difluor-1-chlorethan und/oder 1,1,1-Trifluor-2,2-dichlorethan, 10 bis 25 Gew-%, vorzugsweise 10 bis 20 Gew-% Ethylchlorid und/oder gesättigte $C_3$- bis $C_5$-Kohlenwasserstoffe sowie gegebenenfalls bis zu 15 Gew-%, vorzugsweise 5 bis 10 Gew-% Kohlendioxid. Die optimale Zusammensetzung läßt sich leicht durch Vorversuche ermitteln. Erhöht man den Gehalt an 1,1-Difluor-1-chlorethan und/oder 1,1,1-Trifluor-2,2-dichlorethan auf über 90 Gew-%, so zeigen die Schaumstoffe eine unbefriedigende Dimensionsstabilität, erhöht man den Anteil an Ethylchlorid auf über 25 Gew-%, so ist die Druckfestigkeit des Schaumstoffs unbefriedigend. Erhöht man den Anteil an Kohlendioxid auf über 15 Gew-%, so nimmt der Gehalt an offenen Zellen stark zu und das Wasseraufnahmevermögen des Schaumstoffs steigt an.

Als übliche Zusatzstoffe können dem Styrolpolymerisat-Treibmittel-Gemisch Antistatika, Stabilisatoren, Farbstoffe, Schmiermittel, Füllstoffe, Flammschutzmittel und/oder Keimbildner in üblichen Mengen zugesetzt werden.

Die Erfindung erlaubt die Herstellung von Schaumstoffplatten mit einer Dicke bis 160 mm, einer Breite bis 900 mm und einer Dichte von 25 bis 60 g/l.

Die Herstellung der Schaumstoffe erfolgt erfindungsgemäß in an sich bekannter Weise durch Extrusion. In einem Extruder wird das durch Erwärmen plastifizierte Styrolpolymerisat mit dem Treibmittelgemisch und den Zusatzstoffen innig vermischt. Das Gemisch durchläuft sodann eine Beruhigungszone, in der es unter ständigem Rühren auf eine Temperatur zwischen etwa 100 und 120 °C gekühlt und anschließend durch eine Düse zu Platten extrudiert wird.

Die Erfindung wird anhand der folgenden Beispiele erläutert. Die in den Beispielen genannten Teile sind Gewichtsteile.

Beispiele 1 bis 9

100 Teile Polystyrol mit einem Schmelzindex von 4,5, 1,5 Teile Hexabromcyclododecan als Flammschutzmittel und 1 Teil Talkum zur Regelung der Zellgröße wurden einem Extruder mit einem inneren Schneckendurchmesser von 120 mm kontinuierlich zugeführt. Durch eine in den Extruder angebrachte Einlaßöffnung wurde gleichzeitig ein Treibmittelgemisch in den Extruder kontinuierlich eingedrückt. Das in dem Extruder gleichmäßig geknetete Gel wurde dann nach einer Verweilzeit von 15 Minuten auf eine Austrittstemperatur von 105 °C gekühlt und durch eine 300 mm breite und 1,5 mm weite Düse in die Atmosphäre extrudiert. Der Schaum wurde durch eine mit dem Extruder verbundenen Formkanal geführt, wobei eine geschäumte Polystyrolplatte mit einer Querschnittsgröße von 650 mm x 50 mm entstand. Das geschäumte Produkt wurde in Stücke mit einer Querschnittsfläche von 600 mm x 50 mm und einer Länge von 1250 mm geschnitten. Geprüft wurden die Proben nach einer Ablagerzeit von 30 Tagen. Der in der Tabelle 1 angegebene λ-Wert wurde aus Messungen nach 6 Monaten auf eine 2jährige Lagerzeit extrapoliert. Das Treibmittelgemisch für jedes Beispiel ist in der Tabelle 1 aufgeführt.

Gemessen wurde der λ-Wert (Wärmeleitzahl) nach DIN 52 612, die Schaumstoffdichte nach DIN 53 420, die Zellgröße nach ASTM D 3842-69, die geschlossenen Zellen nach DIN-ISO 4590, die Wasseraufnahme an ganzen Platten nach DIN 53 434, die Druckfestigkeit nach DIN 53 421 und die Dimensionsstabilität nach DIN 53 431.

Tabelle 1

| Beispiel | Treibmittelmenge Gew-% bezogen auf Polystyrol | $CClF_2CH_3$ Gew-% | $C_2H_5Cl$ Gew-% | n-Pentan Gew-% | Propan Gew.-% | $CO_2$ Gew-% | Wärmeleitzahl $\lambda$-Wert [W/m.K] |
|---|---|---|---|---|---|---|---|
| 1 | 12 | 75 | 25 | – | – | – | 0,0260 |
| 2 | 11 | 90 | – | – | – | 10 | 0,0240 |
| 3 | 11,5 | 80 | 10 | – | 10 | – | 0,0250 |
| 4 | 13 | 75 | – | 20 | – | 5 | 0,0262 |
| 5 | 13,6 | 75 | – | 10 | 15 | – | 0,0255 |
| 6 | 8 | 75 | 10 | – | – | 15 | 0,0300 |
| 7 | 14 | 75 | – | – | 25 | – | 0,0250 |
| 8 | 16 | 75 | – | 25 | – | – | 0,0240 |
| 9 | 11 | 75 | 15 | – | – | 10 | 0,0298 |
| 10 (Vergleich) | 10 | 100 | – | – | – | – | 0,0235 |

Tabelle 1 Forts.

| Beispiel | Schaumstoff-dichte g/l | Zellgröße mm | Geschlossene Zellen % | Wasseraufnahme Vol% | Druckfestigkeit [N/mm$^2$] | Dimensionsstabilität in % | | |
|---|---|---|---|---|---|---|---|---|
| | | | | | | Länge | Breite | Dicke |
| 1 | 36 | 0,17 | 96,2 | 0,09 | 0,29 | + 4,2 | + 4,6 | + 3,0 |
| 2 | 34 | 0,15 | 95,5 | 0,15 | 0,3 | + 6,5 | + 4,8 | + 3,2 |
| 3 | 35,5 | 0,2 | 95,0 | 0,14 | 0,31 | + 6,8 | + 6,2 | + 4,4 |
| 4 | 33 | 0,14 | 95,3 | 0,12 | 0,28 | + 5,2 | + 5,5 | + 3,1 |
| 5 | 34 | 0,18 | 97 | 0,1 | 0,27 | + 6,0 | + 6,2 | + 4,0 |
| 6 | 32 | 0,25 | 94,8 | 0,18 | 0,26 | + 4,3 | + 4,8 | + 4,2 |
| 7 | 33 | 0,28 | 96 | 0,1 | 0,27 | + 6,0 | + 6,5 | + 4,5 |
| 8 | 38 | 0,1 | 98 | 0,08 | 0,36 | + 7,8 | + 9 | + 6 |
| 9 | 34,6 | 0,20 | 95,80 | 0,145 | 0,29 | + 4,1 | + 4,6 | + 4,0 |
| 10 | 36 | 0,12 | 98 | 0,085 | 0,32 | + 10,2 | + 9,2 | + 6,5 |

EP 0 361 095 A1

## Ansprüche

Verfahren zur Herstellung von Schaumstoffplatten mit hoher Druckfestigkeit und hohem Wärmedämmvermögen durch Extrusion eines Gemisches aus einem Styrolpolymerisat, 8 bis 16 Gew.-%, bezogen auf das Styrolpolymerisat, eines Treibmittels sowie gegebenenfalls üblichen Zusatzstoffen, dadurch gekennzeichnet, daß man als Treibmittel ein Gemisch verwendet, welches

a) 75 bis 90 Gew.-% 1,1-Difluor-1-chlorethan und/oder 1,1,1-Trifluor-2,2-dichlorethan

b) 10 bis 25 Gew.-% Ethylchlorid und/oder gesättigte $C_3$- bis $C_5$-Kohlenwasserstoffe und

c) 0 bis 15 Gew.-% Kohlendioxid

enthält.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | WO-A-8 606 084 (DOW CHEMICAL CO.) <br> * Ansprüche 1-4,6 * <br> --- | 1 | C 08 J 9/12 |
| A | EP-A-0 251 462 (OSIPOW et al.) <br> * Anspruch 1 * <br> --- | 1 | |
| A,D | FR-A-2 340 342 (DOW) <br> * Ansprüche 1,4; Seiten 13-15; Beispiel 23 * <br> ----- | 1 | |

| | | | RECHERCHIERTE SACHGEBIETE (Int. Cl.5) |
|---|---|---|---|
| | | | C 08 J |

Der vorliegende Recherchenbericht wurde für alle Patentansprüche erstellt

| Recherchenort | Abschlußdatum der Recherche | Prüfer |
|---|---|---|
| DEN HAAG | 25-12-1989 | OUDOT R. |